# FASCICULE DE BREVET EUROPEEN

(11) **EP 1 620 313 B1**
(45) Date de publication et mention de la délivrance du brevet: **20.09.2006**
(21) Numéro de dépôt: 03789476.3
(22) Date de dépôt: 24.11.2003
(51) Int. Cl.: B64D 37/14

(54) **PROCEDE POUR LE CHARGEMENT EN CARBURANT DUN AERONEF AU SOL**
VERFAHREN ZUR BETANKUNG EINES SICH AM BODEN BEFINDENDEN FLUGZEUGS MIT TREIBSTOFF
METHOD FOR FILLING AN AIRCRAFT WITH FUEL ON THE GROUND

(30) Priorité: 02.05.2003 FR 0305407
(43) Date de publication de la demande: 01.02.2006
(73) Titulaire: Airbus, 31707 Blagnac (FR)
(72) Inventeur: HAGHAYEGHI, Ali, F-31470 Sainte Foy De Peyrolieres (FR)
(74) Mandataire: Bonnetat, Christian
(86) Numéro de dépôt international: PCT/FR2003/003461
(87) Numéro de publication internationale: WO 2004/098997

(56) Documents cités:
- FR-A- 1 511 741
- US-A- 4 918 619
- US-A- 5 321 945

## Description

La présente invention concerne un procédé pour le chargement en carburant d'un aéronef au sol.

On sait que le remplissage au sol des réservoirs d'un aéronef gros porteur est géré automatiquement par un calculateur qui calcule, en fonction de la quantité de carburant nécessaire pour que ledit aéronef accomplisse sa mission, les différentes masses de carburant à verser dans les différents réservoirs pour que, à chaque instant du remplissage, le centre de gravité dudit aéronef soit maintenu dans une plage autorisée de positions le long de l'axe longitudinal dudit aéronef.

Ainsi, on obtient en continu un bon centrage dudit aéronef, ce qui lui assure une stabilité satisfaisante et lui permet, après remplissage, d'être aisément contrôlable.

On sait, par ailleurs, qu'un aéronef civil moderne comporte au moins un réservoir de carburant disposé dans la queue et que, dans le cas d'un aéronef gros porteur, la capacité de ce réservoir de queue est importante. De plus, si cet aéronef est du type gros porteur, la distance séparant ce réservoir de queue du centre de l'aéronef est grande. Or, cette distance constitue le bras de levier avec lequel la masse de carburant contenue dans le réservoir de queue exerce un moment sur ledit aéronef. Ce moment peut donc être très important et exercer une forte action de déstabilisation de l'aéronef. Le remplissage du réservoir de queue en carburant est donc critique pour la stabilité de l'aéronef.

La présente invention a pour objet de remédier à cet inconvénient. Elle concerne un procédé de chargement en carburant d'un aéronef au sol assurant la stabilité et le centrage dudit aéronef sans risque de déstabilisation lors du remplissage du réservoir de queue et permettant même de communiquer audit aéronef une pilotabilité optimale lors de la phase de décollage et du début du vol.

A cette fin, selon l'invention, le procédé pour le chargement en carburant d'un aéronef au sol, ledit aéronef comportant des réservoirs de carburant répartis dans les ailes et le fuselage et au moins un réservoir de carburant disposé dans la queue, ledit procédé permettant de maintenir à chaque instant du chargement le centre de gravité dudit aéronef dans une plage autorisée de positions le long de l'axe longitudinal dudit aéronef et prenant en compte :
- la masse marchande MC, hors carburant, emportée par l'aéronef ;
- la position XC, à l'intérieur de ladite plage autorisée, du centre de gravité dudit aéronef au sol, lorsque seule ladite masse marchande MC est chargée et répartie dans l'aéronef ; et
- la masse de carburant PFQ nécessaire à l'accomplissement de la mission que ledit aéronef doit remplir avec ladite masse marchande MC,
est remarquable en ce que :
- on détermine, à l'intérieur de ladite plage autorisée, une position optimale CGt à atteindre pour ledit centre de gravité, lorsque ladite charge marchande MC et ladite masse de carburant PFQ nécessaire à la mission sont chargées à bord dudit aéronef ;
- on détermine la relation (R) liant la variation de position du centre de gravité de l'aéronef à la variation de masse de carburant à l'intérieur dudit réservoir de queue ;
- on verse dans lesdits réservoirs des masses de carburant, dont la somme constitue une masse de chargement provisoire MP, qui est inférieure à ladite masse de carburant PFQ nécessaire à la mission et qui, ajoutée à ladite masse marchande MC, fait passer le centre de gravité de l'aéronef de ladite position XC correspondant à cette dernière à une position provisoire XP, telle que l'apport dans ledit réservoir de queue d'une masse de carburant égale à la différence Δ entre la masse de carburant PFQ nécessaire à la mission et ladite masse de chargement provisoire MP fait passer, conformément à ladite relation (R), ledit centre de gravité de l'aéronef de la position provisoire XP à la position optimale CGt ; et
- on verse dans ledit réservoir de queue une masse de carburant égale à ladite différence Δ.

Ainsi, selon l'invention, en utilisant de façon avantageuse le fort bras de levier qu'offre le réservoir de queue, on ajuste la position du centre de gravité à une position optimale assurant la meilleure stabilité de l'aéronef au sol, au décollage et au début du vol. Par ailleurs, puisque les réservoirs d'un aéronef sont en communication les uns avec les autres par des liaisons commandables, cette position optimale peut être conservée en croisière, par transvasement de carburant entre lesdits réservoirs. La pilotabilité de l'aéronef est donc optimale au sol, pendant le décollage et en vol. De plus, la traînée et la consommation en carburant sont minimales. Par ailleurs, les moments exercés par les charges aérodynamiques supportées par certaines parties de l'aéronef en vol, par exemple les ailes, sont réduits, de sorte qu'il est possible d'alléger lesdites parties et, donc, de diminuer la masse globale de l'aéronef.

La masse de chargement provisoire MP peut résulter uniquement de masses de carburant versées dans les seuls réservoirs des ailes et du fuselage. Cependant, elle peut également comporter une masse de carburant versée dans ledit réservoir de queue, antérieurement au versement dans celui-ci de la masse de carburant égale à ladite différence Δ. Par ailleurs, au moins certaines desdites masses de carburant peuvent ne pas être versées en une seule fois, mais au contraire par fractions successives, notamment pour mieux maîtriser la variation de position du centre de gravité dans ladite plage autorisée.

Pour pouvoir commencer le chargement en carburant avant la connaissance exacte et définitive de la masse marchande et de la position correspondante du centre de gravité, on peut mettre en oeuvre le procédé avec des valeurs MC et XC qui sont, en réalité, des valeurs par défaut de la masse marchande réelle et définitive MC* et de la position réelle et définitive XC* du centre de gravité. Dans ce cas, après chargement des réservoirs à la masse de carburant PFQ nécessaire à l'accomplissement de la mission et obtention de la position optimale CGt pour le centre de gravité à partir desdites valeurs par défaut MC et XC, on redistribue par transvasement la masse de carburant PFQ entre lesdits réservoirs, avec transvasement partiel dudit réservoir de queue dans d'autres réservoirs, pour tenir compte desdites valeurs réelles MC* et XC* tout en maintenant le centre de gravité à ladite position optimale CGt.

Par ailleurs, il peut se faire, par exemple à la suite d'une modification de dernière minute du plan de vol ou des conditions météorologiques le long du trajet de la mission, que, après chargement desdits réservoirs à la masse de carburant PFQ nécessaire à l'accomplissement de la mission et atteinte de la position optimale CGt pour le centre de gravité, on doive augmenter ladite masse de carburant PFQ d'une masse additionnelle dPFQ. Dans ce cas, on répartit ladite masse additionnelle dPFQ dans lesdits réservoirs tout en maintenant le centre de gravité à ladite position optimale CGt. Une telle répartition de la masse additionnelle de carburant dPFQ peut s'effectuer, selon les cas, soit uniquement dans lesdits réservoirs des ailes et du fuselage, soit dans ces derniers et dans ledit réservoir de queue.

Les figures du dessin annexé feront bien comprendre comment l'invention peut être réalisée. Sur ces figures, des références identiques désignent des éléments semblables.
La figure 1 est une vue en élévation d'un avion gros porteur reposant sur le sol.
La figure 2 est une vue de dessus de l'avion gros porteur de la figure 1, sur laquelle le contour dudit avion est représenté en pointillés, alors que les réservoirs de celui-ci sont représentés en traits pleins.
La figure 3 est une vue en plan partielle agrandie de l'avion des figures 1 et 2 illustrant la plage autorisée de positions pour le centre de gravité dudit avion.
La figure 4 est un diagramme illustrant le procédé de chargement en carburant de l'avion des figures 1 à 3, conformément à la présente invention.
Les figures 5 et 6 illustrent l'action produite, dans le diagramme de la figure 4, par le versement de masses de carburant dans les réservoirs dudit avion.
Les figures 7 et 8 illustrent, sur le diagramme de la figure 4, deux variantes de chargement desdits réservoirs en carburant.

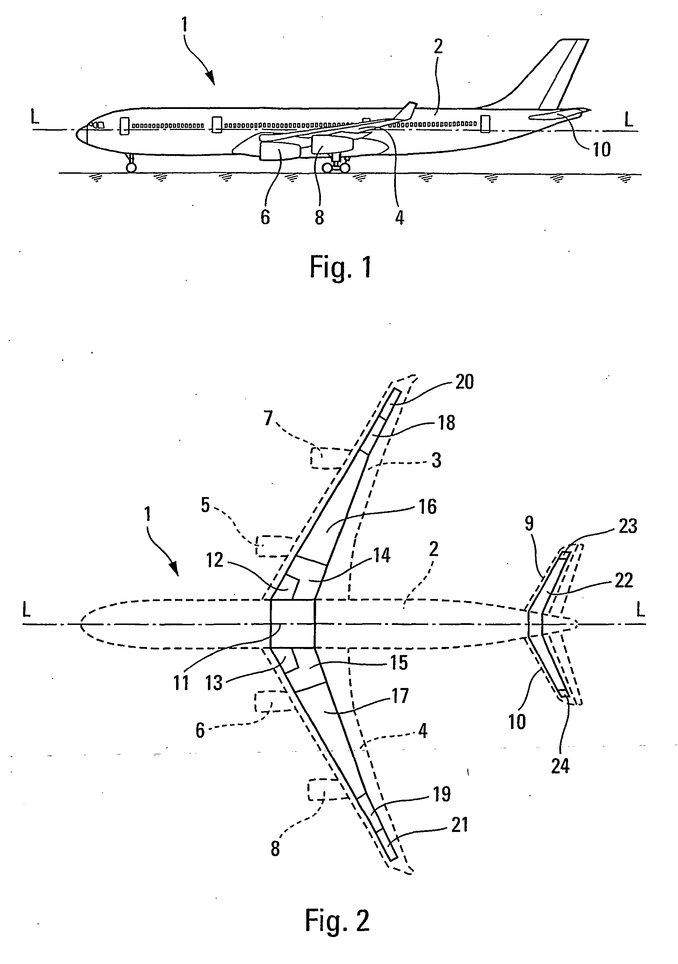

L'avion gros porteur 1, représenté schématiquement sur les figures 1 à 3, comporte un fuselage 2 d'axe longitudinal L-L et deux ailes 3 et 4 symétriques par rapport audit fuselage. Chaque aile 3 ou 4 porte un moteur interne 5 ou 6 et un moteur externe 7 ou 8. Le fuselage 2 comporte de plus un empennage arrière comportant deux plans 9 et 10, symétriques par rapport audit fuselage 2.

Comme cela est montré sur la figure 2, l'avion 1 comporte une pluralité de réservoirs de carburant, à savoir :
- un réservoir central 11, prévu dans le fuselage 2 dans la partie avant entre les deux ailes 3 et 4 ;
- deux réservoirs 12 et 13 d'alimentation des moteurs internes 5 et 6;
- deux réservoirs internes 14 et 15 ;
- deux réservoirs intermédiaires 1 6 et 17 ;
- deux réservoirs externes 18 et 19 ; et
- deux réservoirs d'évent 20 et 21,
lesdits réservoirs 12, 13 ; 14, 15 ; 16, 17 ; 18, 19 et 20, 21 étant disposés respectivement dans les ailes 3 et 4, deux à deux symétriquement l'un par rapport à l'autre, ainsi que :
- un réservoir de queue 22, disposé symétriquement dans les plans 9 et 10 et dans la partie de queue du fuselage 2 ; et
- deux réservoirs d'évent 23 et 24, symétriques, en communication avec le réservoir de queue 22.

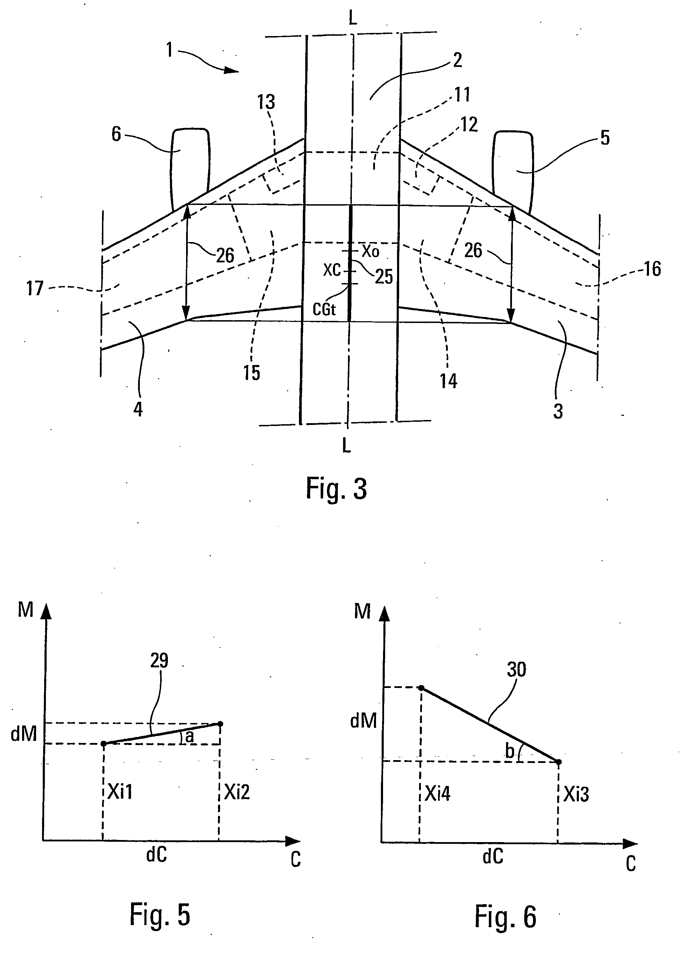

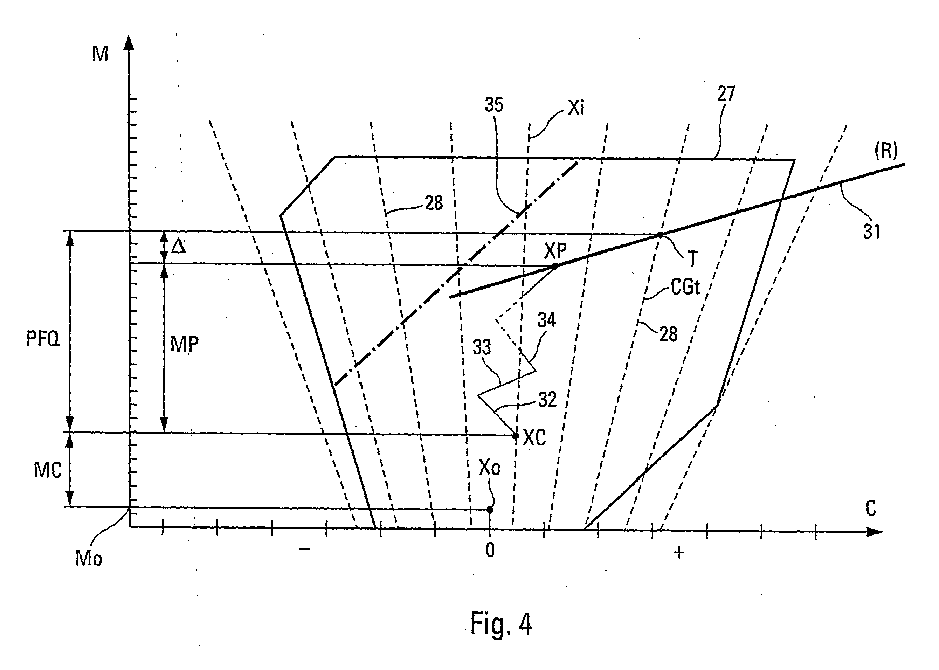

De façon connue, le constructeur de l'avion 1 définit une plage autorisée 25 pour la position du centre de gravité de l'avion le long de l'axe longitudinal (voir la figure 3). Dans l'exemple de réalisation représenté, la plage autorisée 25 correspond à la corde 26 des ailes 3 et 4 au niveau des moteurs internes 5 et 6, projetée sur l'axe longitudinal L-L et appelée corde de référence. Comme on peut le voir, à vide (sans carburant, sans passager, sans fret, ...), le centre de gravité de l'avion se trouve à la position Xo.

Comme le montre la figure 4, cette plage autorisée 25 correspond à une enveloppe de chargement 27, fournie par le constructeur de l'avion et tracée dans un repère dont l'axe des abscisses porte les moments C exercés par les charges autour de la position Xo (pour laquelle l'avion à vide présente la masse Mo) et dont l'axe des ordonnées porte les masses M. En superposition sur cette enveloppe 27 sont portées des droites 28, dont chacune d'elles correspond à une position Xi du centre de gravité dans la plage autorisée 25. De façon connue, chaque position Xi est définie par un pourcentage de la corde de référence. Sur la figure 4, les droites 28 représentent, de la gauche vers la droite, des positions Xi correspondant à des fractions de plus en plus grandes de la corde de référence 26. Ces droites 28 divergent avec l'augmentation des masses, du fait que plus la masse totale de l'avion est grande, moins une augmentation de masse déterminée a d'effet sur la position du centre de gravité.

Sur le diagramme de la figure 4, l'origine des moments C correspond à la position Xo à vide, les valeurs négatives (-) sur l'axe des moments correspondant à des déplacements du centre de gravité vers l'avant de l'avion 1, et les valeurs positives (+) dudit axe des moments correspondant à des déplacements du centre de gravité vers l'arrière de l'avion 1. Comme le montre la figure 5, une augmentation de charge dM à l'arrière de l'origine définie par la position Xo entraîne une augmentation de moment dC, faisant passer le centre de gravité de la position Xi1 à une position plus arrière Xi2. L'augmentation de moment dC est linéaire en fonction de l'augmentation de charge dM, car elle ne dépend que de la distance (bras de levier) de cette augmentation de charge par rapport à l'origine définie par Xo. Dans le système d'axe C, M, la variation de dC en fonction de dM est donc représentée par une caractéristique linéaire 29, dont la pente positive a est caractéristique de l'emplacement arrière de l'augmentation de charge dM. Bien entendu, cette caractéristique linéaire 29 est également représentative de la variation de position du centre de gravité dXi = Xi2 - Xi1 en fonction de la variation de masse dM.

De même, comme le montre la figure 6, une augmentation de charge dM à l'avant de l'origine définie par la position Xo entraîne une augmentation de moment dC, faisant passer le centre de gravité de la position Xi3 à une position plus avant Xi4. Ne dépendant également que de la distance de l'augmentation de charge par rapport à ladite origine, la variation de dC en fonction de dM peut donc être représentée par une caractéristique linéaire 30, dont la pente négative b est caractéristique de l'emplacement avant de l'augmentation de charge dM. La caractéristique linéaire 30 est également représentative de la variation de la position du centre de gravité dXi = Xi4 - Xi3 en fonction de la variation de masse dM.

Sur le diagramme de la figure 4, on a représenté que, après chargement de la masse marchande MC (passagers, fret, etc ...), mais avant chargement du carburant, la position du centre de gravité de l'avion 1 se trouve à la position Xi = XC, en arrière de la position Xo. On a de plus représenté la masse de carburant PFQ nécessaire à l'accomplissement de la mission que l'aéronef 1 doit remplir avec la masse marchande MC.

Par calcul prenant en compte les caractéristiques de l'avion, la masse à vide Mo, la masse marchande MC, la masse de carburant PFQ, on détermine, à l'intérieur de la plage autorisée 25, la position optimale (en ce qui concerne le centrage de l'avion 1) que doit occuper le centre de gravité dudit avion après chargement de la masse marchande MC et de la masse de carburant PFQ. Cette position optimale porte la référence CGt sur la figure 4. Ainsi, après un tel chargement, l'avion 1 doit se trouver dans l'état représenté par le point T de la droite 28 correspondant à la position CGt, pour lequel la masse de l'avion 1 est égale à la somme Mo + MC + PFQ.

Par ailleurs, on détermine la relation (R) du type dXi = k.dM, liant la variation de position dXi du centre de gravité de l'aéronef 1 à la variation de masse de carburant dM à l'intérieur du réservoir de queue 22. Dans cette relation (R), la lettre k désigne une constante représentative de la distance entre la position Xo et ledit réservoir de queue 22. La représentation graphique de cette relation (R) sur le diagramme de la figure 4, est une droite semblable à la caractéristique linéaire 29 de la figure 5. Sur la figure 4, on a représenté la caractéristique correspondante 31 passant par le point T défini ci-dessus.

Conformément à la présente invention, on verse dans lesdits réservoirs 11 à 19 et éventuellement 22 des masses de carburant, dont la somme constitue une masse de chargement provisoire MP, qui est inférieure à la masse de carburant PFQ nécessaire à l'accomplissement de la mission et qui, ajoutée à la masse marchande MC, fait passer le centre de gravité de l'aéronef 1 de la position XC à une position provisoire XP. Cette masse de chargement provisoire MP est choisie pour correspondre à l'intersection entre la droite 28 relative à la position XP (non représentée) du centre de gravité et la caractéristique linéaire 31.

Bien entendu, pendant cette opération de chargement, des masses de carburant semblables sont versées dans des réservoirs symétriques. Chaque masse de carburant ajoutée dans le réservoir central 11 (et éventuellement dans le réservoir de queue 22) et les masses de carburant ajoutées symétriquement dans les paires de réservoirs symétriques sont associées, sur le diagramme de la figure 4, à des caractéristiques linéaires 32, 33, 34, ... respectivement semblables aux caractéristiques linéaires 29 ou 30 en fonction de la position des réservoirs correspondants, par rapport à Xo. Ces caractéristiques forment une ligne brisée reliant Xc (pour la masse Mo + MC) à XP (pour la masse Mo + MC + MP).

Après chargement de la masse provisoire MP et atteinte de la position provisoire XP pour le centre de gravité, on verse dans le réservoir de queue 22 une masse de carburant égale à la différence Δ = PFQ - MP. Il en résulte que, simultanément, la masse totale de l'avion 1 passe de Mo + MC + MP à Mo + MC + PFQ et que le centre de gravité de ce dernier passe de la position XP à la position CGt, en se déplaçant sur la caractéristique 31.

Du fait que, grâce à l'invention, on assure la position du centre de gravité à la position optimale CGt, il est possible de réduire l'enveloppe 27, par exemple du côté avant pour des masses élevées, ce qui est représenté par la ligne 35 coupant le coin supérieur gauche de ladite enveloppe 27. Cette réduction de l'enveloppe 27 correspond en fait à la suppression de conditions particulières de vol, éprouvantes pour certaines parties de l'avion 1. Celles-ci peuvent donc, grâce à l'invention, être allégées, ce qui réduit la masse totale de l'avion.

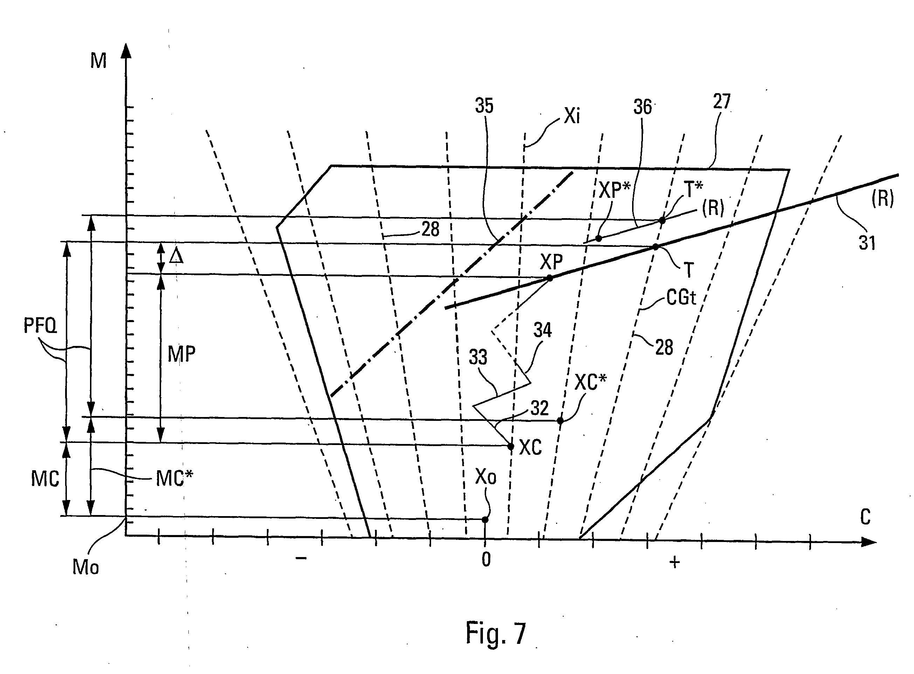

Sur la figure 7, on a illustré le cas où la masse MC et la position XC utilisées sur le diagramme de la figure 4 sont des valeurs par défaut de la masse marchande réelle MC* et de la position réelle MC*. Dans cette situation, le point T de la droite 28 correspondant à la position CGt n'est pas correct et il doit être remplacé par le point T* de la même droite 28 correspondant à la charge Mo + MC* + PFQ. On voit que si MC* et XC* avaient été connues avec exactitude, on aurait utilisé la caractéristique 36 du réservoir de queue 22 passant par le point T* et non pas la caractéristique 31 passant par le point T. Notamment du fait du décalage du centre de gravité vers les valeurs croissantes (de XC à XC*), la nouvelle valeur XP* de la caractéristique 36 (jouant le rôle de la valeur XP de la caractéristique 31) est elle-même décalée en conséquence, de sorte qu'il apparaît que la masse de carburant MP doit être redistribuée par transvasement entre les réservoirs 11 à 19 et que la masse Δ dans le réservoir de queue doit être partiellement transvasée dans d'autres réservoirs, pour maintenir en T* le centre de gravité à la position CGt.

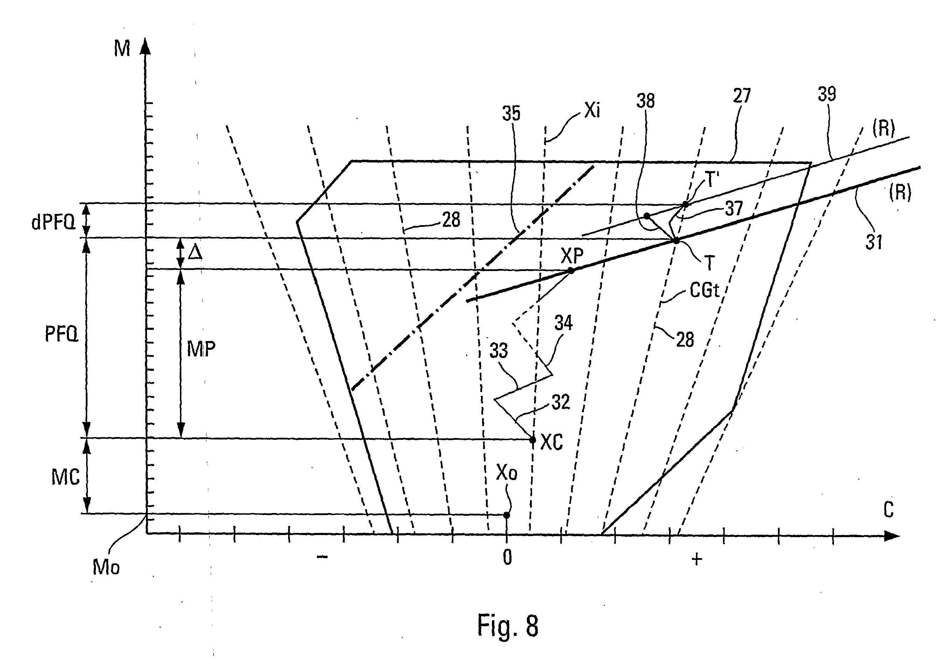

Sur la figure 8, on a illustré le cas où, après chargement des réservoirs 11 à 1 9 et 22 à la masse de carburant PFQ et obtention de la position optimale CGt (comme en regard de la figure 4), on doit augmenter la masse PFQ d'une masse additionnelle dPFQ. Dans ce cas, le point T doit passer en T' de la droite 28 correspondant à la position CGt. Ceci peut se faire par répartition, soit uniquement dans les réservoires 11 à 19, comme illustré par la ligne brisée 37, soit dans les réservoirs 11 à 19 et 22, comme cela est illustré par la ligne brisée 38. Dans ce dernier cas, on utilise la caractéristique 39 du réservoir de queue 22 passant par le point T'.

## Revendications

1. Procédé pour le chargement en carburant d'un aéronef (1) au sol, ledit aéronef comportant des réservoirs de carburant (11 à 19) répartis dans les ailes (3,4) et le fuselage (2) et au moins un réservoir de carburant (22) disposé dans la queue, ledit procédé permettant de maintenir à chaque instant du chargement le centre de gravité dudit aéronef dans une plage autorisée (25) de positions le long de l'axe longitudinal (L-L) dudit aéronef et prenant en compte :
• la masse marchande MC, hors carburant, emportée par l'aéronef ;
• la position XC, à l'intérieur de ladite plage autorisée (25), du centre de gravité dudit aéronef au sol, lorsque seule ladite masse marchande MC est chargée et répartie dans l'aéronef ; et
• la masse de carburant PFQ nécessaire à l'accomplissement de la mission que ledit aéronef doit remplir avec ladite masse marchande MC,
**caractérisé en ce que** :
- on détermine, à l'intérieur de ladite plage autorisée (25), une position optimale CGt à atteindre pour ledit centre de gravité, lorsque ladite charge marchande MC et ladite masse de carburant PFQ nécessaire à la mission sont chargées à bord dudit aéronef ;
- on détermine la relation (R) liant la variation de position du centre de gravité de l'aéronef à la variation de masse de carburant à l'intérieur dudit réservoir de queue (22) ;
- on verse dans lesdits réservoirs des masses de carburant, dont la somme constitue une masse de chargement provisoire MP, qui est inférieure à ladite masse de carburant PFQ nécessaire à la mission et qui, ajoutée à ladite masse marchande MC, fait passer le centre de gravité de l'aéronef de ladite position XC correspondant à cette dernière à une position provisoire XP, telle que l'apport dans ledit réservoir de queue d'une masse de carburant égale à la différence Δ entre la masse de carburant PFQ nécessaire à la mission et la masse de chargement provisoire MP fait passer, conformément à ladite relation (R), ledit centre de gravité de l'aéronef de la position provisoire XP à la position optimale CGt ; et
- on verse dans ledit réservoir de queue (22) une masse de carburant égale à ladite différence Δ.

2. Procédé selon la revendication 1,
**caractérisé en ce que** ladite masse de chargement provisoire MP résulte de masses de carburant versées uniquement dans lesdits réservoirs (11 à 19) des ailes et du fuselage.

3. Procédé selon la revendication 1,
**caractérisé en ce que** ladite masse de chargement provisoire MP résulte de masses de carburant versées dans lesdits réservoirs (11 à 19) des ailes et du fuselage, ainsi que dans ledit réservoir de queue (22).

4. Procédé selon l'une des revendications 1 à 3,
**caractérisé en ce qu'**au moins certaines desdites masses de carburant sont versées par fractions successives dans les réservoirs correspondants.

5. Procédé selon l'une des revendications 1 à 4,
**caractérisé en ce que** ladite masse marchande MC et la position XC du centre de gravité utilisées sont des valeurs par défaut de la masse marchande réelle MC* et de la position réelle XC* du centre de gravité et **en ce que**, après chargement des réservoirs à la masse de carburant PFQ nécessaire à l'accomplissement de la mission et obtention de la position optimale CGt pour le centre de gravité à partir desdites valeurs par défaut MC et XC, on redistribue par transvasement la masse de carburant PFQ entre lesdits réservoirs, avec transvasement partiel dudit réservoir de queue dans d'autres réservoirs, pour tenir compte desdites valeurs réelles MC* et XC* tout en maintenant le centre de gravité à ladite position optimale CGt.

6. Procédé selon l'une des revendications 1 à 5,
**caractérisé en ce que** dans le cas où, après chargement desdits réservoirs à la masse de carburant PFQ nécessaire à l'accomplissement de la mission et atteinte de la position optimale CGt pour le centre de gravité, on doit augmenter ladite masse de carburant PFQ d'une masse additionnelle dPFQ, on répartit ladite masse additionnelle dPFQ dans lesdits réservoirs tout en maintenant le centre de gravité à ladite position optimale CGt.

7. Procédé selon la revendication 6,
**caractérisé en ce que** ladite masse additionnelle dPFQ est répartie uniquement dans lesdits réservoirs (11 à 19) des ailes et du fuselage.

8. Procédé selon la revendication 6,
**caractérisé en ce que** ladite masse additionnelle dPFQ est répartie dans lesdits réservoirs (11 à 19) des ailes et du fuselage, ainsi que dans ledit réservoir de queue (22).

## Claims

1. A process for the loading of fuel into an aircraft (1) on the ground, said aircraft comprising fuel tanks (11 to 19) distributed in the wings (3, 4) and the fuselage (2) and at least one fuel tank (22) disposed in the tail, said process making it possible at each instant of the loading to keep the center of gravity of said aircraft in an authorized range (25) of positions along the longitudinal axis (L-L) of said aircraft and taking into account:
• the cargo weight MC, without fuel, carried by the aircraft;
• the position XC, within said authorized range (25), of the center of gravity of said aircraft on the ground, when only said cargo weight MC is loaded and distributed in the aircraft; and
• the weight of fuel PFQ necessary for the accomplishment of the mission that said aircraft is to fulfill with said cargo weight MC,
**characterized in that** :
- an optimal position CGt to be reached for said center of gravity is determined, within said authorized range (25), when said cargo load MC and said weight of fuel PFQ necessary for the mission are loaded on board said aircraft;
- the relation (R) linking the variation in position of the center of gravity of the aircraft to the variation in weight of fuel inside said tail tank (22) is determined;
- weights of fuel are poured into said tanks, the sum of which weights constitutes a provisional loading weight MP, which is less than said weight of fuel PFQ necessary for the mission and which, added to said cargo weight MC, causes the center of gravity of the aircraft to go from said position XC corresponding to the latter to a provisional position XP, such that the feeding into said tail tank of a weight of fuel equal to the difference Δ between the weight of fuel PFQ necessary for the mission and the provisional loading weight MP causes, in accordance with said relation (R), said center of gravity of the aircraft to go from the provisional position XP to the optimal position CGt; and
- a weight of fuel equal to said difference Δ is poured into said tail tank (22).

2. The process as claimed in claim 1,
**characterized in that** said provisional loading weight MP results from weights of fuel poured only into said tanks (11 to 19) of the wings and of the fuselage.

3. The process as claimed in claim 1,
**characterized in that** said provisional loading weight MP results from weights of fuel poured into said tanks (11 to 19) of the wings and of the fuselage, as well as into said tail tank (22).

4. The process as claimed in anyone of claims 1 to 3,
**characterized in that** at least some of said weights of fuel are poured by successive fractions into the corresponding tanks.

5. The process as claimed in anyone of claims 1 to 4,
**characterized in that** said cargo weight MC used and the center of gravity position XC used are default values of the actual cargo weight MC* and of the actual position XC* of the center of gravity and wherein, after loading of the tanks with the weight of fuel PFQ necessary for the accomplishment of the mission and obtaining of the optimal position CGt for the center of gravity on the basis of said default values MC and XC, the weight of fuel PFQ is redistributed by transfer between said tanks, with partial transfer from said tail tank into said other tanks, so as to take account of said actual values MC* and XC* while keeping the center of gravity at said optimal position CGt.

6. The process as claimed in anyone of claims 1 to 5,
**characterized in that** in the case where, after loading of said tanks with the weight of fuel PFQ necessary for the accomplishment of the mission and reaching of the optimal position CGt for the center of gravity, said weight of fuel PFQ must be increased by an additional weight dPFQ, said additional weight dPFQ is distributed into said tanks while keeping the center of gravity at said optimal position CGt.

7. The process as claimed in claim 6,
**characterized in that** said additional weight dPFQ is distributed only into said tanks (11 to 19) of the wings and of the fuselage.

8. The process as claimed in claim 6,
**characterized in that** said additional weight dPFQ is distributed into said tanks (11 to 19) of the wings and of the fuselage, as well as into said tail tank (22).

## Patentansprüche

1. Verfahren zum Betanken eines sich am Boden befindlichen Flugzeugs (1), wobei das Flugzeug aufweist Brennstofftanks (11 bis 19), die in den Flügeln (3, 4) und im Rumpf (2) verteilt sind und wenigstens einen Brennstofftank (22), der in dem Schwanz angeordnet ist, wobei das Verfahren ermöglicht, zu jedem Zeitpunkt der Betankung den Schwerpunkt des Flugzeugs in einem zulässigen Bereich (25) von Positionen entlang der Längsachse (L - L) des Flugzeugs zu halten und berücksichtigt::
• das Zuladegewicht MC, außer Brennstoff, das vom Flugzeug mitgenommen wird;
• die Position XC im Inneren des zulässigen Bereichs (25) des Schwerpunkts des am Boden befindlichen Flugzeugs, wenn nur das Zuladegewicht MC beladen und im Flugzeug verteilt wird; und
• das Gewicht des Brennstoffs PFQ, das für die Erfüllung der Mission notwendig ist, die das Flugzeug mit dem Zuladegewicht MC erfüllen muss,
**dadurch gekennzeichnet, dass**:
- im Inneren des zulässigen Bereichs (25) eine für den Schwerpunkt einzunehmende optimale Position CGt bestimmt wird, wenn die Zuladung MC und das für die Mission notwendige Brennstoffgewicht PFQ an Bord des Flugzeugs geladen werden;
- die Beziehung (R) bestimmt wird, welche die Veränderung der Position des Schwerpunkts des Flugzeugs mit der Veränderung des Brennstoffsgewichts im Inneren des Tanks (22) im Schwanz verknüpft;
- in die Tanks Brennstoff mit einem Gewicht gefüllt wird, dessen Summe ein provisorisches Betankungsgewicht MP bildet, das kleiner als das für die Mission notwendige Brennstoffgewicht PFQ ist und das, nachdem es dem Zuladegewicht MC hinzugefügt worden ist, den Schwerpunkt des Flugzeugs aus seiner entsprechenden Position XC in eine provisorische Position XP wandern lässt, genau so, dass die Zufuhr eines Brennstoffgewichts in den Tank am Schwanz, das gleich der Differenz Δ zwischen dem für die Mission notwendigen Brennstoffgewicht PFQ und dem provisorischen Betankungsgewicht MP ist, den Schwerpunkt des Flugzeugs gemäß der Beziehung (R) aus der provisorischen Position XP in die optimale Position CGt wandern lässt; und
- in den Tank (22) am Schwanz ein Brennstoffgewicht gleich der Differenz Δ gefüllt wird.

2. Verfahren nach Anspruch 1,
**dadurch gekennzeichnet,**
**dass** das provisorische Betankungsgewicht MP aus den nur in die Tanks (11 bis 19) der Flügel und des Rumpfes gefüllten Brennstoffgewichte resultiert.

3. Verfahren nach Anspruch 1,
**dadurch gekennzeichnet,**
**dass** das provisorische Betankungsgewicht MP aus der in die Tanks (11 bis 19) der Flügel und des Rumpfes sowie in den Tank (22) am Schwanz gefüllten Brennstoffgewichte resultiert.

4. Verfahren nach einem der Ansprüche 1 bis 3,
**dadurch gekennzeichnet,**
**dass** wenigstens einige der Brennstoffgewichte mittels aufeinanderfolgender Teilmengen in die entsprechenden Tanks gefüllt werden.

5. Verfahren nach einem der Ansprüche 1 bis 4,
**dadurch gekennzeichnet,**
**dass** das Zuladegewicht MC und die Position XC des Schwerpunkts, die verwendet werden, Werte in Abwesenheit für das reelle Zuladegewicht MC* und die reelle Position XC* des Schwerpunkts sind und dass nach Betankung der Tanks mit dem für die Erfüllung der Mission notwendigen.Brennstoffgewicht PFQ und nach Erhalt der optimalen Position CGt für den Schwerpunkt, ausgehend von den Werten MC und XC, in Abwesenheit das Brennstoffgewicht PFQ durch Umfüllung zwischen den Tanks umverteilt wird, und zwar mit einer teilweisen Umverteilung vom Tank am Schwanz in die anderen Tanks, um die reellen Werte MC* und XC* zu berücksichtigen, indem man gleichzeitig den Schwerpunkt der optimalen Position CGt beibehält.

6. Verfahren nach einem der Ansprüche 1 bis 5,
**dadurch gekennzeichnet,**
**dass** in dem Fall, in welchem nach dem Betanken der Tanks mit dem für das Erfüllen der Mission notwendigen Brennstoffgewicht PFQ und nach Erreichen der optimalen Position CGt für den Schwerpunkt das Brennstoffgewicht PFQ um ein zusätzliches Gewicht dPFQ erhöht werden muss, verteilt man das zusätzliche Gewicht dPFQ in den Tanks, indem man gleichzeitig den Schwerpunkt der optimalen Position CGt beibehält.

7. Verfahren nach Anspruch 6,
**dadurch gekennzeichnet,**
**dass** das zusätzliche Gewicht dPFQ nur in den Tanks (11 bis 19) der Flügel und des Rumpfes verteilt wird.

8. Verfahren nach Anspruch 6,
**dadurch gekennzeichnet,**
**dass** das zusätzliche Gewicht dPFQ in den Tanks (11 bis 19) der Flügel und des Rumpfes sowie in dem Tank (22) am Schwanz verteilt wird.
